Europäisches Patentamt

(19) European Patent Office

Office européen des brevets

(11) Numéro de publication: **0 135 451**
**B1**

(12) **FASCICULE DE BREVET EUROPEEN**

(45) Date de publication du fascicule du brevet:
**01.04.87**

(21) Numéro de dépôt: **84420109.5**

(22) Date de dépôt: **28.06.84**

(51) Int. Cl.⁴: **G 11 B 5/70**, B 32 B 27/36

(54) Films polyesters composites.

(30) Priorité: **13.07.83 FR 8311931**

(43) Date de publication de la demande:
**27.03.85 Bulletin 85/13**

(45) Mention de la délivrance du brevet:
**01.04.87 Bulletin 87/14**

(84) Etats contractants désignés:
**DE FR GB IT LU NL**

(56) Documents cités:
**EP - A - 0 035 835**
**GB - A - 1 397 653**

(73) Titulaire: **RHONE-POULENC FILMS, 25, quai Paul Doumer, F-92408 Courbevoie (FR)**

(72) Inventeur: **Corsi, Philippe, La Duchère 336, Balmont Ouest, F-69009 Lyon (FR)**
Inventeur: **Eyraud, Marcel, 7, rue des Noyers, F-69005 Lyon (FR)**

(74) Mandataire: **Rioufrays, Roger et al, RHONE-POULENC INTERSERVICES Service Brevets Chimie Centre de Recherches de Saint-Fons B.P. 62, F-69192 Saint-Fons Cédex (FR)**

## Description

La présente invention concerne des films minces polyesters composites biétirés ayant au moins sur une face externe une rugosité nouvelle et originale, amenée par des protubérances en forme de dômes et de pics et permettant d'obtenir un compromis très satisfaisant, dans un large domaine de rugosité, entre les propriétés de machinabilité (facilité d'enroulage à grande vitesse ou glissant) et les phénomènes d'abrasion (résistance à la formation de poudre blanche), et utilisables notamment pour la fabrication de bandes magnétiques ayant de bonnes propriétés électromagnétiques.

On connaît déjà des films polyesters composites minces utilisables notamment pour la fabrication de bandes d'enregistrement audio ou vidéo et comportant une couche transparente, en général non chargée ou éventuellement très peu chargée, et au moins une couche externe comportant un additif constitué par une charge fine et permettant d'apporter les propriétés de glissant nécessaire à une bonne machinabilité.

De tels films composites biorientés sont par exemple décrits dans GB-A-1 397 653 au nom de La Cellophane, où l'on trouve des films composites ayant à coeur une couche de polyester transparente (non chargée), et à l'extérieur au moins une couche polyester moins transparente et plus glissante et contenant des particules solides de dimension inférieure à 2 micromètres et provenant du résidu du catalyseur.

Il n'est pas facile avec de tels films composites d'adapter la rugosité à l'application envisagée en jouant sur le microrelief et donc sur la taille, le nombre et la répartition des protubérances. Il n'est pas également aisé de régler la différence de rugosité entre les deux faces externes du film composite.

Il est en outre difficile d'éviter toute présence de pics de dimensions trop élevées par rapport à l'ensemble des autres protubérances (il est bien connu que cette présence est néfaste puisqu'elle implique en effet des pertes d'information et donc des défauts comme les «drop out» dans le cas des bandes magnétiques vidéo...).

Dans EP-A-35835 on a décrit des films composites constitués par au moins une couche externe chargée d'un polymère amorphe thermoscellable dont l'épaisseur est inférieure à la dimension particulaire moyenne de la charge qu'elle contient et d'une couche support non chargée d'un polymère cristallin plus épaisse que la ou les couches externes. L'aspect de la surface de la couche externe résulte directement et essentiellement des aspérités créées par la saillie des particules de charges, à la surface de la couche polymérique. Une telle surface se caractérise essentiellement par la présence de pics et permet d'améliorer la machinabilité des films (bobinage notamment). Les rugosités ainsi obtenues ne peuvent être acceptées pour certaines applications des films composites car elles induisent lors de l'utilisation des phénomènes d'abrasion. Ces phénomènes constituent un obstacle à l'emploi de tels films dans le domaine des bandes magnétiques.

En résumé, il est donc difficile de pouvoir commodément ajuster la microrugosité de la face externe de la pellicule (ou des deux faces externes), tout en éliminant les protubérances gênantes.

Il se posait donc le problème de mettre au point de nouveaux films polyesters composites biorientés ayant une rugosité adaptable, dans un domaine varié d'utilisations et dépourvus de protubérances de dimensions gênantes et ayant donc un ensemble satisfaisant de propriétés, par exemple dans le domaine de la machinabilité, de la résistance à l'abrasion et servant de support pour des bandes magnétiques ayant de bonnes propriétés électromagnétiques... La présente invention répond précisément à ce but.

Il a été trouvé, et c'est ce qui constitue l'objet de la présente invention, des nouveaux films multicouches biorientés constitués par au moins deux couches contiguës (A) et (B) caractérisés en ce que la couche (B) support chargée a une épaisseur supérieure au diamètre médian en volume des particules qu'elle contient et en ce qu'au moins une couche externe dite (A) possède une rugosité apportée par des dômes et des pics, les dômes étant présents à raison d'au moins 5 par $mm^2$ et ayant une hauteur supérieure ou égale à 9/100 de micromètres, un dôme constituant une protubérance telle que le rapport de sa hauteur sur le diamètre de sa base soit inférieur à 1/100, un pic étant une protubérance telle que le rapport de sa hauteur sur le diamètre de sa base soit égal ou supérieur à 1/100.

On précisera que le diamètre de base correspond à la dimension maximale de la particule déterminée par observation microscopique interférométrique.

Les films selon la présente invention possèdent un ensemble particulièrement favorable de dômes et de pics qu'il est impossible d'obtenir selon les techniques conventionnelles: il apparaît que la plupart des pics sont situés sur des dômes ce qui entraîne comme conséquence une amélioration du glissant.

La proportion et la taille relative des dômes et des pics pourra être variée afin d'adapter les rugosités. Bien entendu, les films selon l'invention peuvent comporter dans la couche A, et en quantité quelconque, des dômes ayant moins de 9/100 de micromètres en hauter. Ces dômes n'ont pas d'influence sensible sur la rugosité.

La hauteur des pics et des dômes peut être mesurée par toute méthode interférométrique adaptée à cet effet. On peut par exemple utiliser une méthode interférométrique avec détection de l'amplitude de la phase. [Voir par exemple méthode décrite par G. ROBLIN (J. optics, Paris) 1977, vol. 8, n° 5, pages 309-318].

Ainsi, par interférométrie on peut déterminer les hauteurs de dômes et commodément évaluer le nombre de dômes dont les hauteurs sont situées dans des intervalles dont la valeur est une fraction de la longueur d'onde pour la mesure. Les bornes des intervalles, l'étendue de l'intervalle servant au comptage peuvent être modulés et fixés à la demande. On peut par exemple déterminer le nombre de dômes par $mm^2$ dans des intervalles de dimensions allant de 9/100 de micromètres à 9 (n+1)/100 micromètres, n étant un nombre entier égal ou supérieur à 1 et en général inférieur à 10, et préfrentiellement inférieur ou égal à 5.

On retient avantageusement dans le cadre de la présente invention le comptage des dômes et des pics, entre 9/100 de micromètres et 45/100 de micromètres et préférentiellement entre 9/100 de micromètres et 27/100 de micromètres.

Avantageusement, les films selon l'invention qui possèdent simultanément des dômes et des pics de hauteur supérieure ou égale à 9/100 de micromètres sont tels qu'au moins 80% des pics ont une hauteur au plus égale au double de la hauteur des dômes.

Ainsi, si dans les films de la présente invention les dômes sont de dimension inférieure ou égale à $9(n+1)/100$ en micromètres, n étant un nombre entier tel que précédemment défini, au moins 80% des pics auront une hauteur inférieure ou égale à $18(n+1)/100$ en micromètres.

Préférentiellement et dans le contexte précédent, 80% des pics auront une hauteur inférieure à $9(n+1)/100$ en micromètres, le restant ayant une hauteur au plus égale à $18(n+1)/100$ en micromètres.

La rugosité des films selon la présente invention est apportée par les dômes et les pics, elle peut se situer à l'intérieur d'intervalles très larges tels que l'on satisfasse aux inégalités suivantes:

$$0,01 \leqslant R_T \leqslant 1$$
$$0,001 \leqslant R_a \leqslant 0,1$$

La rugosité d'un film s'exprime généralement au moyen de deux valeurs:

— une valeur correspondant à la rugosité totale ou maximale $R_T$ (également appelée PV selon les termes anglais «peak-to-valley») qui se définit comme l'écart maximal de la rugosité;

— une valeur correspondant à la rugosité moyenne $R_a$ (également appelée CLA selon les termes anglais «center line average»).

La rugosité totale ou maximale $R_T$ et la rugosité moyenne $R_a$ sont définies et leur mesure est décrite dans la norme internationale ISO R 468.

Bien entendu les intervalles de rugosité des films selon la présente invention peuvent être volontairement fixés dans des intervalles beaucoup plus resserrés en fonction de l'application envisagée.

Dans le domaine des films pour bande vidéo, les rugosités sont en général comprises dans les limites suivantes:

$$0,03 < R_T < 0,3 \qquad 0,003 < R_a < 0,03$$
et préférentiellement dans les limites suivantes
$$0,03 < R_T < 0,1 \qquad 0,003 < R_a < 0,01$$

Dans le domaine des bandes informatique ou audio-visuel la rugosité est nettement plus importante qu'en vidéo. Cette rugosité se situe dans les limites suivantes:

$$0,2 < R_T < 0,50$$
$$0,02 < R_a < 0,05$$

Selon une variante de la présente invention on peut créer sur la face externe (A) des films de la présente invention une rugosité totale $R_T$ au moins égale à 1,3 fois, avantageusement à 1,5 fois et préférentiellement à 2 fois la rugosité totale du film pleine masse (ou monocouche) obtenable avec la même composition polyester que celle servant à l'élaboration de la couche A.

La rugosité de la couche A peut donc être bien supérieure à celle de la surface du film pleine masse monocouche. Cette élévation de rugosité trouve son existence dans un report de rugosité lié à la présence d'une couche polyester contiguë à la couche A, la couche B contenant des particules de diamètre médian en volume x. La rugosité de la couche A, plus élevée que celle du film pleine masse correspondant, peut être modulée en fonction de l'épaisseur de cette couche A et de la taille et de la quantité de particules présentes dans la couche B. Sans vouloir être lié par une quelconque explication, on pense qu'il s'établit sur la face relativement lisse de la couche A une rugosité par report du fait de la présence de déformations existant dans la couche B au niveau de l'interface des deux couches. Le report de rugosité est plus fort si la taille des particules de la couche B augmente. Le report de rugosité est également fonction de l'épaisseur de la couche A et est d'autant plus accentué que l'épaisseur de la couche A est réduite.

L'existence de ces deux couches contiguës A et B apparaît donc être l'un des éléments caractéristiques de la présente invention.

La couche B (il peut y avoir plusieurs couches B) comporte donc une quantité de matière particulaire inerte correspondant en général pondéralement à 0,01% à 2% et de préférence de 0,1 à 1% du poids de la résine polyester de la couche B, les particules inertes ayant un diamètre médian en volume adapté à l'application envisagée: le diamètre médian en volume est habituellement compris entre 0,2 et 2,5 micromètres.

Dans le domaine des films pour application vidéo, les particules inertes ont en général un diamètre médian en volume compris entre 0,2 et 1 micromètre; en audio et bande informatique, le diamètre médian des particules est compris en général entre 0,5 et 2,5 micromètres et préférentiellement entre 0,5 et 1,5 micromètres.

Par diamètre médian en volume on entend pour une particule la valeur du diamètre sphérique correspondant à 50% du volume de l'ensemble des particules et lue sur la courbe de distribution cumulée reliant les volumes des particules au diamètre de particules.

Par diamètre sphérique d'une particule, on entend le diamètre d'une sphère ayant un volume équivalent à celui de ladite particule.

Les particules de la couche B peuvent provenir d'une charge inerte fine et/ou de résidus issus du système catalytique mis en oeuvre durant la réaction d'interéchange et/ou de polycondensation.

Si on opte pour l'introduction de charges inertes, les charges fines peuvent alors être de nature très variée, naturelle ou synthétique. La répartition de leur granulométrie peut être large ou resserrée.

Les charges fines peuvent être choisies parmi: le carbonate de calcium, le silicate d'aluminium calciné ou hydraté (kaolin, kaolinite...), le silicate de magnésium, le sulfate de baryum, le mica, la terre de diatomées, le téréphthalate de calcium, le phosphate de lithium, des oxydes contenant un métal ou un métalloïde choisi parmi les éléments des groupes II, III et IV du tableau périodique des éléments, par exemple l'oxyde d'aluminium, $TiO_2$, $SiO_2$, $MgO$...

Enfin il est également possible dans le cadre de la présente invention d'introduire dans la couche B deux populations distinctes de charges différent entre elles par leur nature et/ou leur granulométrie. [Cette situation peut être rencontrée lorsque l'on recyclera les films contenant des charges fines dans la couche (B) et des charges très fines dans la couche (A) comme on le verra plus loin].

Lorsque les particules proviennent du catalyseur celui-ci peut être avantageusement un sel de calcium et/ou de lithium. Les particules peuvent être constituées également par des particules organiques éventuellement polymériques, par un sel organique ou inorganique métallique ou encore par des particules complexes ayant une partie polyester et une partie métallique (voir par exemple brevet BG-A-1 397 653 et brevet US-A-4 138 386).

La taille des particules (diamètre médian, répartition granulométrique) de la couche B, l'épaisseur relative de la couche A sont adaptés de manière à obtenir la rugosité désirée. Un bon report de rugosité, caractérisé par la présence de dômes et de pics peut être facilement obtenu pour un diamètre médian en volume donné en réduisant l'épaisseur de la couche (A). Désignant par x le diamètre médian en volume de la particule de la couche B et sans être limité par des définitions trop strictes, on peut indiquer qu'un report important est obtenu lorsque l'épaisseur de la couche A est au plus égale à 6 fois le diamètre médian en volume x des particules de la couche B. Un tel choix permet de manière générale d'obtenir une rugosité externe au moins égale à 1,3 fois la rugosité du film pleine masse correspondant. Des reports de rugosité existeront également mais de manière moins accentuée lorsque l'épaisseur de la couche A sera inférieure à 10 fois le diamètre médian en volume des particules de la couche (B). On notera que la couche (B) est une couche «épaisse» dont l'épaisseur est au moins égale à 3 fois le diamètre médian de la particule.

La répartition granulométrique des particules présentes dans la couche B a évidemment une influence sur le report de rugosité. Avantageusement on prendra ses dispositions de manière à ce que cette répartition granulométrique des particules ne soit pas trop étendue. Préférentiellement cette répartition granulométrique sera ressérée. A titre d'exemple, en vidéo, dans le cas de l'addition d'une charge fine inerte, celle-ci peut avoir la répartition granulométrique suivante:

2,5 micromètres $>$ d $>$ 1,5 micromètres   0 à   4%
1,5 micromètres $>$ d $>$ 0,5 micromètres  20 à 40%
0,5 micromètre   $>$ d                50 à 80%
d représentant le diamètre de la particule.

Selon une variante avantageuse de la présente invention on prépare des films particulièrement intéressants en utilisant dans la couche B des charges de diamètre médian x tels que l'épaisseur e de la couche A soit reliée au diamètre médian des particules par l'inégalité suivante:

$$x/3 \leqslant e \leqslant 4x$$

L'épaisseur de la couche A est avantageusement inférieure à 6 micromètres.

La résine polyester allant constituer la couche A est une résine chargée contenant des particules très fines (dimension moyenne de particule inférieure à celle des particules de la couche B).

Plus précisément la résine A contient des particules très finement divisée, ayant un diamètre médian en volume y nettement inférieur à celui des particules de la couche B (diamètre x) telle que le rapport y/x soit inférieur ou égal à 0,5 et préférentiellement inférieur à 0,3. L'emploi d'une telle résine favorise la création d'une rugosité comportant simultanément des pics et des dômes dont la taille et le nombre sont fonction des quantités de particules dans les deux couches, de leurs dimensions moyennes et de l'épaisseur relative de la couche A par rapport à la taille des particules présentes dans la couche B.

Les particules de la couche A peuvent provenir de résidus catalytiques et/ou de charges inertes introduites dans la résine polyester.

Lorsque les particules de la couche A résultent de l'introduction de charges inertes la quantité de charge très fine introduite dans la résine A est faible et en général comprise entre 0,01 et 0,5%. La charge très fine est choisie parmi les charges ayant une nature chimique analogue à celle de la charge introduite dans la couche (B) et peut être par exemple du $TiO_2$ ou de la silice. La charge fine et la charge très fine peuvent selon une variante avoir la même nature chimique.

Les couches A contenant des particules telles que précédemment définies peuvent appartenir à des films bicouches ou à des films ayant au moins 3 couches, ces derniers comprenant deux faces externes A.

Lorsque les films selon la présente invention sont constitués par au moins 3 couches, les deux couches externes étant avantageusement des couches A telles que précédemment définies, les deux rugosités des faces externes peuvent être les mêmes ou être différentes. Les films peuvent comporter une ou plusieurs couches coeur éventuellement chargées de manière différente (nature des particules, taille, distribution granulométrique...).

Les films selon l'invention qui possèdent deux couches externes dissymétriques à rugosité originale sont particulièrement intéressants. La présence d'une couche très peu rugueuse destinée à recevoir la matière magnétique, et d'une autre couche à plus forte rugosité (conferrant au film sa bonne machinabilité) offre un intérêt certain dans le domaine des bandes magnétiques, notamment audio et vidéo.

Les films selon l'invention peuvent avoir une épaisseur très variée; celle-ci est en général comprise entre 5 micromètres et 100 micromètres et varie selon l'application envisagée. En vidéo les films ont une épaisseur en général inférieure à 15 micromètres. En informatique et audiovisuel les films ont en général une dimension comprise entre 4 micromètres et 12,5 micromètres.

Les films selon la présente invention peuvent être produits par tout procédé permettant de fabriquer un film multicouche par exemple par coextrusion.

Les films selon la présente invention peuvent ainsi être fabriqués par coextrusion à l'aide d'une filière multicanaux ou à l'aide d'une filière conventionnelle précédée par un dispositif dans lequel les différentes couches sont combinées dans la structure voulue.

Avantageusement, on utilise une filière multicanaux dans laquelle les différents flux de polymères fondus sont amenés à la filière, à partir de canalisations séparées puis répartis dans la largeur de la filière avant de se réunir à l'entrée des lèvres de celle-ci pour donner à la sortie la structure complexe désirée.

Selon une variante de l'invention les films sont obtenus par coextrusion d'au moins deux résines polyesters chargées.

Plus précisément un autre objet de l'invention est constitué par un procédé de préparation de films multicouches biorientés constitués par au moins deux couches contiguës (A) et (B), une couche externe (A) possédant une rugosité par dômes et pics tels que définis précédemment caractérisée en ce que l'on coextrude, au moins, deux résines polyesters l'une destinée à former la couche (A) et contenant de 0,01 à 0,5% de particules inertes de diamètre médian en volume y, l'autre destinée à former la couche (B) et contenant de 0,01 à 2% de particules inertes de diamètre médian en volume x, x étant compris entre 0,5 et 2,5 micromètres, le rapport y/x étant inférieur ou égal à 0,5, le film amorphe résultant de la coextrusion étant étiré biaxialement de manière conventionnelle, l'ouverture des filières étant choisie de telle manière qu'après biétirage l'épaisseur de la couche (A) soit inférieure à 10 x et l'épaisseur de la couche (B) soit au moins égale à 3 fois le diamètre médian de la charge présente dans cette couche.

Les résines de polyester mises en oeuvre dans le cadre de l'invention ne sont pas critiques. Celles-ci peuvent être obtenues selon tout procédé connu à partir de diol (éthylène glycol; butanediol...) et de diacides carboxyliques ou de diester d'acide dicarboxylique. Il peut s'agir également de mélange de polyester ou encore de copolyester tel que ceux obtenus à partir du polytéréphtalate d'éthylèneglycol en remplaçant partiellement l'éthylène glycol par d'autres glycols tels que le butane diol-1,4, le néopentylglycol, le bis (hydroxyméthyl)-1,4 cyclohexane, ou encore en remplaçant partiellement l'acide téréphtalique par un autre acide dibasique, aliphatique ou aromatique tel que l'acide adipique, l'acide sébacique, l'acide isophtalique. Les résines polyesters sont avantageusement choisies de telle manière que l'on puisse conferrer au film après étirage et orientation des propriétés mécaniques satisfaisantes [film à teneur cristalline élevée].

Préférentiellement, les résines polyesters qui vont constituer les couches A et B sont à base de polytéréphtalate d'éthylèneglycol. Préférentiellement, les résines polyesters sont des polytéréphtalates d'éthylène glycol dont la viscosité intrinsèque mesurée à 25°C dans l'o-chlorophénol, à une concentration égale à 1%, est comprise entre 0,6 et 0,75 dl/g.

Les films biétirés selon l'invention sont obtenus à partir de résines polyesters du type A et B, en recevant par exemple sur un tambour tournant refroidi le stratifié coextrudé constitué par les couches fondues superposées de polyester et en faisant subir ensuite au stratifié amorphe les traitements classiques d'étirage (mono ou biétirage dans deux directions perpendiculaires) et de thermofixation.

Bien entendu, les conditions de mise en oeuvre devront être adaptées, de telle manière que l'on obtienne dans la couche A la rugosité originale telle que précédemment définie. On y parviendra aisément en agissant sur l'épaisseur de la couche (A), sur la taille et la distribution granulométrique des particules de la couche B.

Préférentiellement, le stratifié amorphe subit un traitement de biétirage en séquence normale (le premier étirage est longitudinal) ou inverse (le premier étirage est transversal) avec un taux d'étirage longitudinal compris entre 3 et 5 et un étirage transversal compris entre 3 et 5. Le traitement de thermofixation est réalisé à une température croissante dans un intervalle de température compris entre 150 et 250°C.

Les films biétirés, obtenus selon la présente invention, sont remarquables en ce sens qu'ils peuvent servir de support pour de nombreuses applications, notamment pour l'obtention de bandes magnétiques pour ordinateur ou dans le domaine de la vidéo.

Un autre objet de la présente invention est donc constitué par l'utilisation des films précédemment décrits pour l'obtention de bandes magnétiques.

En ce qui concerne en particulier la bande magnétique vidéo, les films composites de l'invention sont des supports présentant un ensemble particulièrement approprié de propriétés: présence d'une face relativement lisse à rugosité par dômes et pics apte à recevoir, avec des bonnes propriétés d'adhérence, la partie magnétique (enduit magnétique ou métallisation) et existence d'une face à rugosité plus importante à base de pics et éventuellement de dômes et permettant d'obtenir une bonne machinabilité.

Comme on l'a déjà dit de tels films possèdent sur la face (A) une rugosité plus élevée que celle du film pleine masse correspondant ayant la même composition; ce phénomène n'a pas, de manière surprenante, d'incidence quelconque sur les propriétés électromagnétiques alors qu'il implique une bien meilleure machinabilité.

On observera également que la couche la plus épaisse du film polyester composite est de manière générale une couche chargée. Les rebuts du film composite, notamment les bords pourront être commodément recyclés pour régénérer en partie la couche B chargée, la structure de ce film permettant d'amortir d'éventuels défauts amenés par la présence inopportune et accidentelle de particules gênantes.

Les exemples qui suivent illustrent l'invention:

## EXEMPLES

On prépare successivement par transestérification à partir de téréphtalate de diméthyle des polytéréphtalate d'éthylèneglycol non chargés et plusieurs lots de polytéréphtalate d'éthylène glycol chargés. Les polymères de polytéréphtalate d'éthylène glycol ont été obtenus en utilisant comme catalyseur d'interéchange soit l'acétate de calcium, soit l'acétate de manganèse et dans les deux cas l'antimoine comme catalyseur de polycondensation. Les divers lots de polymères sont les suivants:

I - polyester non chargé
II - polyester chargé à 0,25% en poids de $TiO_2$ (diamètre médian en volume des particules 0,4 micromètre)

III - polyester chargé à 0,25% en poids de carbonate de calcium (diamètre médian en volume des particules 1 micromètre)

IV - polyester chargé à 0,25% en poids de carbonate de calcium (diamètre médian en volume des particules 0,4 micromètre)

V - polyester chargé à 0,4% en poids de kaolinite (diamètre médian en volume des particules 0,3 micromètre)

VI - polyester chargé à 0,4% en poids de kaolinite (diamètre médian en volume des particules 1 micromètre).

Les polyesters ont une viscosité intrinsèque égale à 0,65 dl/g. Les charges ont été introduites sous forme de suspension glycolique que l'on a incorporé dans le milieu réactionnel en fin de réaction d'inter-échange. Les polyesters contiennet éventuellement des particules provenant de résidus catalytiques; des polyesters contenant des particules de résidus catalytiques sont utilisés aux exemples 4 et 5 pour former les couches (A).

A partir des diverses proportions relatives de polymères on prépare les compositions polymères appropriées qui seront coextrudées afin d'obtenir les films correspondant aux divers exemples.

Les résultats figurent dans le tableau suivant:

| Ex. | COUCHE (A) | | | | COUCHE (B) | | | | RUGOSITES | | | REPARTITION DES DOMES ET DES PICS (couche A) |
|---|---|---|---|---|---|---|---|---|---|---|---|---|
| | Nature | Charge $\emptyset$** | Quantité en ppm | e* | Nature | Charge $\emptyset$** | Quantité en ppm | e* | | Couche (A) | Couche (B) | |
| 1 | TiO$_2$ | 0,4 | 2500 | 4,5 | kaolinite | 1 | 3000 | 7,5 | R$_T$ | 0,155 | 0,28 | — 10 dômes entre 9/100 et 18/100 μm |
| | | | | | | | | | R$_a$ | 0,015 | 0,025 | — 3100 pics entre 9/100 et 18/100 μm |
| | composite 2 couches | | | | | | | | | | | — 800 pics entre 18/100 et 27/100 μm |
| 2 | CO$_3$Ca | 0,4 | 2500 | 2 | CO$_3$Ca | 1 | 2500 | 7 | R$_T$ | 0,12 | 0,15 | — 12 dômes entre 9/100 et 18/100 μm |
| | | | | | | | | | R$_a$ | 0,01 | 0,015 | — 2500 pics entre 9/100 et 18/100 μm |
| | composite 2 couches | | | | | | | | | | | — 700 pics entre 18/100 et 27/100 μm |
| 3 | TiO$_2$ | 0,4 | 2500 | 2 | CO$_3$Ca | 1 | 2500 | 7 | R$_T$ | 0,12 | | — 11 dômes entre 9/100 et 18/100 μm |
| | composite 3 couches 2 couches externes (A) identiques (à savoir: charge, quantité, épaisseur | | | | | | | | R$_a$ | 0,01 | | — 2800 pics entre 9/100 et 18/100 μm — 700 pics entre 18/100 et 27/100 μm |
| 4 | néant | 0 | | 2 | kaolinite | 0,3 | 4000 | 7 | R$_T$ | 0,082 | 0,184 | — 7 dômes/mm$^2$ de hauteur comprise entre 9/100 et 18/100 μm |
| | composite 2 couches | | | | | | | | | 0,009 | 0,017 | — 41 pics/mm$^2$ de hauteur comprise entre 9/100 et 18/100 μm — 4 pics/mm$^2$ de hauteur comprise entre 18/100 et 27/100 μm |
| 5 | néant | 0 | | 5,5 | kaolinite | 1 | 4000 | 3,5 | | 0,11 | 0,28 | — 10 dômes/mm$^2$ de hauteur supérieure à 9/100 μm |
| | composite 2 couches | | | | | | | | | 0,011 | 0,025 | — 31 pics/mm$^2$ de hauteur comprise entre 9/100 et 18/100 μm — 3 pics/mm$^2$ de hauteur comprise entre 18/100 et 27/100 μm |

\* : e* : épaisseur en micromètre

\*\* : $\emptyset$** : diamètre médian en micromètre

On observera que les films pleine masse correspondant aux couches (A) des divers exemples ont les rugosités suivantes:

| Exemples | $R_T$ en micromètres |
|---|---|
| 1 | 0,08 |
| 2 | 0,09 |
| 3 | 0,08 |
| 4 | 0,04 |
| 5 | 0,04 |

Les films pleine masse correspondant possèdent simultanément des dômes et éventuellement des pics [précipitation de résidus catalytiques] mais les pics et les dômes sont en très faible quantité.

## Revendications

1. Films polyesters multicouches biorientés constitués par au moins deux couches contiguës (A) et (B) caractérisés en ce que la couche (B) support chargée a une épaisseur supérieure au diamètre médian en volume des particules qu'elle contient et en ce qu'au moins une couche externe (A) possède une rugosité apportée par des dômes et des pics, les dômes étant présents à raison d'au moins 5 par mm$^2$ et ayant une hauteur supérieure ou égale à 9/100 de micromètres, un dôme constituant une protubérance telle que le rapport de sa hauteur sur le diamètre de sa base soit inférieur à 1/100, un pic étant une protubérance telle que le rapport de sa hauteur sur le diamètre de sa base soit égal ou supérieur à 1/100.

2. Films polyesters selon la revendication 1, dont au moins une couche externe (A) possède une rugosité induite par la présence de dômes et de pics de hauteur supérieure ou égale à 9/100 micromètres caractérisés en ce qu'au moins 80% des pics ont une hauteur au plus égale au double de la hauteur des dômes.

3. Films polyesters selon l'une des revendications 1 et 2, dont au moins une couche externe (A) possède une rugosité induite par la présence de dômes et de pics caractérisés en ce que les dômes ont une hauteur inférieure à 9 (n + 1)/100 de micromètres, n étant un nombre entier égal ou supérieur à 1, 80% des pics ayant une hauteur en micromètres inférieure à 18 (n + 1)/100 de micromètres.

4. Films selon la revendication 3 dans laquelle n est au plus égal à 10.

5. Films polyesters selon l'une des revendications précédentes comprenant une couche polyester (B) contiguë à la couche (A), caractérisé en ce que la couche (B) contient des particules inertes représentant pondéralement de 0,01 à 2% du poids de la résine polyester de la couche B, et ayant un diamètre médian en volume compris entre 0,2 micromètres et 2,5 micromètres.

6. Films selon la revendication 6 dans laquelle les particules de la couche (B) proviennent de l'addition de charge inerte fine.

7. Films polyesters multicouches biorientés selon l'une des revendications précédentes caractérisés en ce que l'épaisseur de la couche (A) est inférieure à 10 fois le diamètre médian en volume à des particules de la couche (B).

8. Films polyesters multicouches biorientés selon l'une des revendications précédentes caractérisés en ce que l'épaisseur de la couche (B) est au moins égale à 3 fois le diamètre médian en volume x des particules présentes dans cette couche.

9. Films polyesters multicouches biorientés selon l'une des revendications précédentes caractérisés en ce que la couche (A) contient des particules inertes finement divisées de diamètre médian en volume y tel que le rapport des diamètres médian en volume y/x soit inférieur ou égal à 0,5.

10. Films polyesters selon la revendication 10 dans laquelle les particules inertes de la couche (A) proviennent de l'addition de charge inerte fine.

11. Films polyesters selon l'une des revendications précédentes comprenant deux couches externes (A) et au moins une couche (B).

12. Procédé de préparation de films multicouches biorientés constitués par au moins deux couches contiguës (A) et (B), une couche externe (A) possédant une rugosité par dômes et pics tels que définis dans la revendication 1 caractérisée en ce que l'on coextrude, au moins, deux résines polyesters l'une destinée à former la couche (A) et contenant de 0,01 à 0,5% de particules inertes de diamètre médian en volume y, l'autre destinée à former la couche (B) et contenant de 0,01 à 2% de particules inertes de diamètre médian en volume x, x étant compris entre 0,5 et 2,5 micromètres, le rapport y/x étant inférieur ou égal à 0,5, le film amorphe résultant de la coextrusion étant étiré biaxialement de manière conventionnelle, l'ouverture des filières étant choisie de telle manière qu'après biétirage l'épaisseur de la couche (A) soit inférieure à 10 x et l'épaisseur de la couche (B) soit au moins égale à 3 fois le diamètre médian de la charge présente dans cette couche.

13. Utilisations des films décrits dans l'une des revendications 1 à 12 ou obtenus selon la revendication 13 pour l'obtention de bandes magnétiques.

## Patentansprüche

1. Mehrlagige, doppelt verstreckte Polyesterfolien, bestehend aus mindestens zwei nebeneinanderliegenden Schichten (A) und (B), dadurch gekennzeichnet, dass die gefüllte Trägerschicht (B) eine Stärke aufweist, die grösser ist als der auf das Volumen bezogene mittlere Durchmesser der Teilchen, die sie enthält, und dass mindestens eine Aussenschicht (A) eine durch Wölbungen und Spitzen bedingte Rauhigkeit aufweist, mindestens fünf Wölbungen je mm$^2$ vorhanden sind, deren Höhe $\geq$ 9/100 μm ist, wobei eine Wölbung eine solche Ausstülpung darstellt, dass das Verhältnis ihrer Höhe zum Durchmesser ihrer Basis < 1/100 ist, und wobei eine Spitze eine solche Ausstülpung ist, dass das Verhältnis ihrer Höhe zum Durchmesser ihrer Basis $\geq$ 1/100 ist.

2. Polyesterfolien nach Anspruch 1, bei denen mindestens eine Aussenschicht (A) eine durch die Anwesenheit von Wölbungen und Spitzen mit einer Höhe > 9/100 μm hervorgerufene Rauhigkeit aufweist, dadurch gekennzeichnet, dass mindestens 80% der Spitzen höchstens doppelt so hoch sind wie die Wölbungen.

3. Polyesterfolien nach einem der Ansprüche 1 und 2, bei denen mindestens eine Aussenschicht (A) eine durch die Anwesenheit von Wölbungen und Spitzen hervorgerufene Rauhigkeit aufweist, dadurch gekennzeichnet, dass die Höhe der Wölbungen $< 9(n+1)/100$ µm ist, wobei n eine ganze Zahl $> 1$ ist, und 80% der Spitzen eine Höhe $< 18(n+1)/100$ µm aufweisen.

4. Folien nach Anspruch 3, bei denen n höchstens gleich 10 ist.

5. Polyesterfolien nach einem der vorangehenden Ansprüche, umfassend eine an die Schicht (A) anstossende Polyesterschicht (B), dadurch gekennzeichnet, dass die Schicht (B) inerte Teilchen enthält, die gewichtsmässig 0,01 bis 2% des Gewichtes des Polyesterharzes der Schicht (B) ausmachen, und einen auf das Volumen bezogenen mittleren Durchmesser von 0,2 bis 2,5 µm aufweisen.

6. Folien nach Anspruch 5, bei denen die Teilchen der Schicht (B) aus dem Zusatz eines inerten feinen Füllstoffes stammen.

7. Mehrlagige, doppelt verstreckte Polyesterfolien nach einem der vorangehenden Ansprüche, dadurch gekennzeichnet, dass die Stärke der Schicht (A) kleiner ist als das 10fache des auf das Volumen bezogenen mittleren Durchmessers der Teilchen der Schicht (B).

8. Mehrlagige, doppelt verstreckte Polyesterfolien nach einem der vorangehenden Ansprüche, dadurch gekennzeichnet, dass die Stärke der Schicht (B) mindestens das 3fache des auf das Volumen bezogenen mittleren Durchmessers x der in dieser Schicht vorhandenen Teilchen ist.

9. Mehrlagige, doppelt verstreckte Polyesterfolien nach einem der vorangehenden Ansprüche, dadurch gekennzeichnet, dass die Schicht (A) fein zerteilte inerte Teilchen mit einem solchen auf das Volumen bezogenen mittleren Durchmesser y enthält, dass das Verhältnis der mittleren Durchmesser $y/x \leqq 0,5$ ist.

10. Polyesterfolien nach Anspruch 9, bei denen die inerten Teilchen der Schicht (A) aus dem Zusatz eines inerten feinen Füllstoffes stammen.

11. Polyesterfolien nach einem der vorangehenden Ansprüche, umfassend zwei Aussenschichten (A) und mindestens eine Schicht (B).

12. Verfahren zur Herstellung von mehrlagigen, doppelt verstreckten Folien, bestehend aus mindestens zwei aneinanderstossenden Schichten (A) und (B), wobei eine Aussenschicht (A) eine durch Wölbungen und Spitzen, wie im Anspruch 1 definiert, hervorgerufene Rauhigkeit aufweist, dadurch gekennzeichnet, dass man mindestens zwei Polyesterharze coextrudiert, von denen das eine dazu bestimmt ist, die Schicht (A) zu bilden und 0,01 bis 0,5% inerte Teilchen mit einem mittleren Volumendurchmesser y enthält, das andere dazu bestimmt ist, die Schicht (B) zu bilden und 0,01 bis 2% inerte Teilchen mit einem mittleren Volumendurchmesser x enthält, x 0,5 bis 2,5 µm ausmacht, das Verhältnis $y/x \leqq 0,5$ ist, der beim Coextrudieren erhaltene amorphe Film in üblicher Weise biaxial verstreckt wird, die Öffnung der Düsen so gewählt wird, dass nach dem Doppelverstrecken die Stärke der Schicht (A) kleiner als 10 × und die Stärke der Schicht (B) mindestens gleich dem 3fachen des mittleren Durchmessers der in dieser Schicht enthaltenen Füllstoffe ist.

13. Verwendung der in einem der Ansprüche 1 bis 12 beschriebenen oder gemäss dem Anspruch 13 erhaltenen Folien zur Herstellung von Magnetbändern.

**Claims**

1. Biaxially oriented multilayer polyester films consisting of at least two adjacent layers (A) and (B), characterized in that the filled support layer (B) has a thickness which is greater than the median volume diameter of the particles which it contains and in that at least one outer layer (A) has a roughness brought about by domes and peaks, the domes being present in a concentration of at least 5 per mm² and having a height greater than or equal to 9/100 of micrometres, a dome forming a protuberance such that the ratio of its height to the diameter of its base is less than 1/100, a peak being a protuberance such that the ratio of its height to the diameter of its base is equal to or greater than 1/100.

2. Polyester films according to Claim 1, in which at least one outer layer (A) has a roughness caused by the presence of domes and peaks of a height greater than or equal to 9/100 micrometres, characterized in that at least 80% of the peaks have a height equal to at most twice the height of the domes.

3. Polyester films according to either of Claims 1 and 2, in which at least one outer layer (A) has a roughness caused by the presence of domes and peaks, characterized in that the domes have a height smaller than $9(n+1)/100$ of micrometres, n being an integer equal to or greater than 1, 80% of the peaks having a height in micrometres which is below $18(n+1)/100$ of micrometres.

4. Films according to Claim 3, in which n equals at most 10.

5. Polyester films according to one of the preceding claims, comprising a polyester layer (B) adjacent to the layer (A), characterized in that the layer (B) contains inert particles representing by weight 0.01 to 2% of the weight of the polyester resin of the layer B and having a median volume diameter of between 0.2 micrometres and 2.5 micrometres.

6. Films according to Claim 5, in which the particles in the layer (B) are derived from the addition of fine inert filler.

7. Biaxially oriented multilayer polyester films according to one of the preceding claims, characterized in that the thickness of the layer (A) is less than 10 times the median volume diameter of the particles in the layer (B).

8. Biaxially oriented multilayer polyester films according to one of the preceding claims, characterized in that the thickness of the layer (B) is equal to at least 3 times the median volume diameter x of the particles present in this layer.

9. Biaxially oriented multilayer polyester films according to one of the preceding claims, characterized in that the layer (A) contains finely divided inert particles of median volume diameter y such that the ratio of the median volume diameter y/x is smaller than or equal to 0.5.

10. Polyester films according to Claim 9 in which the inert particles in the layer (A) are derived from the addition of fine inert filler.

11. Polyester films according to one of the preceding claims, incorporating two outer layers (A) and at least one layer (B).

12. Process for preparing biaxially oriented multilayer films which consist of at least two adjacent layers (A) and (B), an outer layer (A) having a roughness due to domes and peaks such as defined in Claim 1, characterized in that at least two polyester resins are coextruded, one intended to form the layer (A) and containing from 0.01 to 0.5% of inert particles of median volume diameter y, the other intended to form the layer (B) and containing from 0.01 to 2% of inert particles of median volume diameter x, x being between 0.5 and 2.5 micrometres, the ratio y/x being smaller than or equal to 0.5, the amorphous film resulting from the coextrusion being drawn biaxially in a conventional manner, the opening of the dies being chosen so that after biaxial drawing the thickness of the layer (A) is less than 10×  and the thickness of the layer (B) is equal to at least 3 times the median diameter of the filler present in this layer.

13. Uses of the films described in one of Claims 1 to 12, or obtained according to Claim 13 to produce magnetic tapes.